# EUROPEAN PATENT SPECIFICATION

(11) **EP 2 910 748 B1**
(45) Date of publication and mention of the grant of the patent: **17.01.2018**
(21) Application number: 12891331.6
(22) Date of filing: 13.08.2012
(51) Int. Cl.: F01N 3/36, F01N 3/08, F01N 3/20, F01N 11/00

(54) **ADDITIVE AGENT SUPPLY DEVICE FOR INTERNAL COMBUSTION ENGINES**
ADDITIVZUFÜHRVORRICHTUNG FÜR VERBRENNUNGSMOTOREN
DISPOSITIF D'ALIMENTATION EN ADDITIF POUR MOTEURS À COMBUSTION INTERNE

(43) Date of publication of application: 26.08.2015
(73) Proprietor: TOYOTA JIDOSHA KABUSHIKI KAISHA, Toyota-shi, Aichi, 471-8571 (JP)
(72) Inventor: OTA, Hirohiko, Toyota-shi, Aichi 471-8571 (JP)
(74) Representative: D Young & Co LLP
(86) International application number: PCT/JP2012/070618
(87) International publication number: WO 2014/027394

(56) References cited:
- EP-B1- 2 191 112
- WO-A1-2011/145567
- DE-A1-102004 061 259
- JP-A- H06 315 690
- JP-A- 2008 163 795
- JP-A- 2008 163 795
- JP-A- 2012 002 062

## Description

### TECHNICAL FIELD

The present invention relates to an additive supply device for an internal combustion engine.

### BACKGROUND ART

Devices are known that supply additive to the exhaust passage of an internal combustion engine to purify exhaust from the engine. As an example, according to a device described in Patent Document 1, to reduce and purify nitrogen oxide (NOx) in exhaust in exhaust with a catalyst, urea aqueous solution is supplied into an exhaust passage.

However, additive cannot be supplied into the exhaust passage easily if the additive is frozen. Thus, a heating section to thaw the additive may be provided to a pump, a tank, or an additive supply passage, which form an additive supply device.

The device described in Patent Document 1 includes a thawing control system that heats additive by using engine coolant. After the additive is thawed, a supply module pump is activated. If the pressure in a supply module does not reach a certain value while the pump is operating, an alarm indicating a failure in the thawing control system is issued.

### PRIOR ART DOCUMENTS

### Patent Documents

Patent Document 1: Japanese Laid-Open Patent Publication No. 2012-2062

### SUMMARY OF THE INVENTION

### Problems that the Invention is to Solve

As in the aforementioned device, if the pump is activated after thawing process and the pressure of additive is not increased by the operation of the pump, the additive is not thawed properly. In this case, it is possible to determine the occurrence of an abnormality in any of the heating sections provided to the pump, the tank, and the supply passage. However, an abnormality occurring in the heating section provided to the tank cannot be identified out of abnormalities that can occur in these multiple heating sections.

The present invention has been made in view of the aforementioned conventional circumstances. Accordingly, it is an objective of the present invention to allow identification of an abnormality occurring in a heating section provided to a tank out of abnormalities that can occur in multiple heating sections provided to an additive supply device. Means for Solving the Problems

To achieve the foregoing objective, the present invention provides an additive supply device for an internal combustion engine that includes a tank that stores additive, a pump that delivers the additive in the tank, a supply passage through which the additive delivered from the pump is supplied to an exhaust passage of the internal combustion engine, a tank heating section that heats the additive in the tank, a pump heating section that heats the additive in the pump, a passage heating section that heats the additive in the supply passage, a pressure detecting section that detects the pressure of the additive in the supply passage, a remaining amount detecting section that detects a remaining amount of the additive in the tank, a heating controller that exerts heating control of the tank heating section, the pump heating section, and the passage heating section, and a signal output section. In a case in which the pump is operated to supply the additive to the exhaust passage after the heating control of the tank heating section, the pump heating section, and the passage heating section is started, the signal output section outputs a signal indicating an abnormality in the tank heating section if the additive pressure detected by the pressure detecting section is reduced during supply of the additive and the additive remaining amount detected by the remaining amount detecting section indicates the presence of the additive remaining in the tank.

When there is an abnormality in the tank heating section, additive in the tank is not thawed sufficiently. This reduces the amount of additive existing in the liquid form in the tank. Thus, as a result of addition of the additive, the additive in the liquid form will be consumed completely in a short period. This reduces the pressure in the supply passage. This reduction in the supply passage pressure means that the additive can be added even in the short period. Thus, additive in the pump and the supply passage can be estimated to have been thawed so that the pump heating section and the passage heating section can be estimated to been operating normally.

Thus, if addition of additive by operating the pump after starting the heating control of the tank heating section, the pump heating section, and the passage heating section reduces the additive pressure in the supply passage, the occurrence of an abnormality in the tank heating section can be estimated while the pump heating section and the passage heating section can be estimated to be operating normally. Addition of additive in the absence of additive remaining in the tank also reduces the additive pressure in the supply passage. However, reduction in the additive pressure in the presence of additive remaining in the tank is not caused by shortage of additive in the tank. In this case, it can be determined that the reduction in the additive pressure is caused by a thawing failure of the additive in the tank.

In the aforementioned additive supply device, the pump is activated to supply additive to the exhaust passage after the heating control of the tank heating section, the pump heating section, and the passage heating section is started. The signal output section outputs a signal indicating an abnormality in the tank heating section if the additive pressure detected by the pressure detecting section is reduced during supply of the additive to the exhaust passage and the additive remaining amount detected by the remaining amount detecting section indicates the presence of additive remaining in the tank. Thus, an abnormality occurring in the heating section provided to the tank can be identified out of abnormalities that can occur in the multiple heating sections provided to the additive supply device.

A signal indicating an abnormality in the tank heating section may be output in the way of lighting a warning light or generating an alarm by sound, for example. The signal indicating an abnormality in the tank heating section may also be output in the way of setting a flag value responsive to this signal.

If additive in the tank remains in a frozen state around the remaining amount detecting section, the additive remaining amount detected by the remaining amount detecting section shows substantially no change between time before the supply of additive is started and time after the supply of additive is started. Thus, in accordance with one aspect of the present invention, the signal output section outputs a signal indicating an abnormality in the tank heating section if the additive pressure detected by the pressure detecting section is reduced during supply of additive and the additive remaining amount shows no change between time before the supply of the additive is started and time after the supply of the additive is started.

When the additive remaining amount detected by the remaining amount detecting section is larger than a predetermined reference value, there is additive remaining in the tank. Thus, in accordance with one aspect of the present invention, the signal output section outputs a signal indicating an abnormality in the tank heating section if the additive pressure detected by the pressure detecting section is reduced during the supply of additive and the additive remaining amount detected by the remaining amount detecting section is larger than a predetermined reference value.

At least one of the tank heating section, the pump heating section, and the passage heating section can be an electric heater.

### BRIEF DESCRIPTION OF THE DRAWINGS

Fig. 1 is a schematic diagram showing an overall structure of one embodiment of the present invention;
Fig. 2 is a schematic diagram showing the structure of a urea aqueous solution supply mechanism of the embodiment;
Fig. 3 is a flowchart showing a process for diagnosing an abnormality of the embodiment;
Fig. 4 is a flowchart showing a process according to a modification of the abnormality diagnosing process of the embodiment; and
Fig. 5 is a flowchart showing a part of a process according to a modification of the abnormality diagnosing process of the embodiment.

### MODES FOR CARRYING OUT THE INVENTION

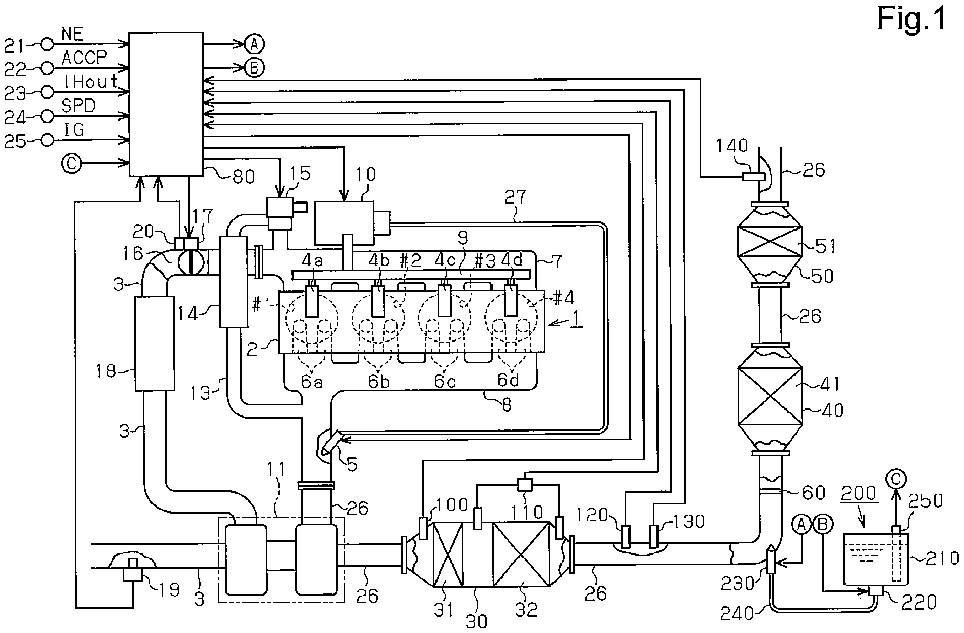

An additive supply device for an internal combustion engine according to one embodiment of the present invention will be described with reference to Figs. 1 to 3. The device is applied to a diesel engine (hereinafter, referred to an engine) mounted on a vehicle.

As shown in Fig. 1, an engine 1 is provided with multiple cylinders #1 to #4. Multiple fuel injection valves 4a to 4d are attached to a cylinder head 2. The fuel injection valves 4a to 4d are for injection of fuel into combustion chambers of corresponding ones of the cylinders #1 to #4. The cylinder head 2 is provided with intake ports for introduction of fresh air into the cylinders and exhaust ports 6a to 6d for exhaust of combustion gas to the outside of the cylinders. The intake ports and the exhaust ports 6a to 6d are provided for corresponding ones of the cylinders #1 to #4. An alternator that generates power using engine output is connected to the crankshaft of the engine 1.

The fuel injection valves 4a to 4d are connected to a common rail 9 that stores high-pressure fuel under pressure. The common rail 9 is connected to a supply pump 10. The supply pump 10 draws in fuel from a fuel tank and supplies the high-pressure fuel to the common rail 9. The high-pressure fuel supplied to the common rail 9 is injected into the cylinders through the fuel injection valves 4a to 4d when the fuel injection valves 4a to 4d are opened.

The intake ports are connected to an intake manifold 7. The intake manifold 7 is connected to an intake passage 3. An intake throttle valve 16 for control of the amount of intake air is provided in the intake passage 3.

The exhaust ports 6a to 6d are connected to an exhaust manifold 8. The exhaust manifold 8 is connected to an exhaust passage 26.

A turbocharger 11 is located in the exhaust passage 26. The turbocharger 11 uses exhaust pressure for supercharging intake air to be introduced into the cylinders. An intercooler 18 is provided in the intake passage 3 between an intake-side compressor of the turbocharger 11 and the intake throttle valve 16. The intercooler 18 is intended to cool intake air increased in temperature as a result of supercharging by the turbocharger 11.

A first purifying member 30 for purifying exhaust is located in a section of the exhaust passage 26 that is downstream of an exhaust-side turbine of the turbocharger 11. The first purifying member 30 houses an oxidation catalyst 31 and a DPF catalyst 32 provided in series as viewed in the flowing direction of exhaust.

A catalyst for oxidation of HC in exhaust is supported by the oxidation catalyst 31. The DPF catalyst 32 is a filter to collect PM (particulate matter) in exhaust. The DPF catalyst 32 is made of porous ceramic. A catalyst for promoting oxidation of PM is supported by the DPF catalyst 32. Particulate matter in exhaust is collected while passing through porous walls of the DPF catalyst 32.

A fuel addition valve 5 is provided near an aggregation portion of the exhaust manifold 8. The fuel addition valve 5 is for supply of fuel as additive to the oxidation catalyst 31 or the DPF catalyst 32. The fuel addition valve 5 is connected via a fuel supply pipe 27 to the supply pump 10. Where appropriate, the position of the fuel addition valve 5 can be changed as long as it is within the exhaust system and on the upstream side of the first purifying member 30.

A second purifying member 40 for purifying exhaust is located in a section of the exhaust passage 26 that is downstream of the first purifying member 30. The second purifying member 40 houses a selective reduction NOx catalyst (hereinafter referred to as an SCR catalyst) 41 functioning as an exhaust purifying catalyst for reducing and purifying NOx in exhaust using a reducing agent.

A third purifying member 50 for purifying exhaust is further provided in a section of the exhaust passage 26 that is downstream of the second purifying member 40. The third purifying member 50 houses an ammonia oxidation catalyst 51 for purifying ammonia in exhaust.

The engine 1 is provided with a urea aqueous solution supply mechanism 200 that supplies urea aqueous solution as additive to the SCR catalyst 41. The urea aqueous solution supply mechanism 200 is formed of a tank 210 storing urea aqueous solution, a pump 220 that delivers the urea aqueous solution from the tank 210, a urea injection valve 230 for injection of urea aqueous solution into the exhaust passage 26, a supply pipe 240 functioning as a supply passage connecting the urea injection valve 230 and the pump 220, a level sensor 250 that detects a urea aqueous solution remaining amount NR corresponding to the amount of urea aqueous solution in the tank 210, and a heater that heats the urea aqueous solution in the urea aqueous solution supply mechanism 200, for example. The level sensor 250 corresponds to the aforementioned remaining amount detecting section.

The urea injection valve 230 is provided in the exhaust passage 26 between the first and second purifying members 30 and 40. The urea injection valve 230 has an injection hole facing the SCR catalyst 41. Opening the urea injection valve 230 injects urea aqueous solution into the exhaust passage 26 through the supply pipe 240, thereby adding the urea aqueous solution to exhaust flowing in the exhaust passage 26.

The pump 220 is an electric pump. In response to input of a drive signal, the pump 220 is activated to deliver urea aqueous solution. When the pump 220 rotates forward, the urea aqueous solution is delivered from the tank 210 toward the urea injection valve 230. When the pump 220 rotates in reverse, the urea aqueous solution is delivered from the urea injection valve 230 to the tank 210. Specifically, when the pump 220 rotates in reverse, the urea aqueous solution is recovered from the urea injection valve 230 and the supply pipe 240 to return to the tank 210.

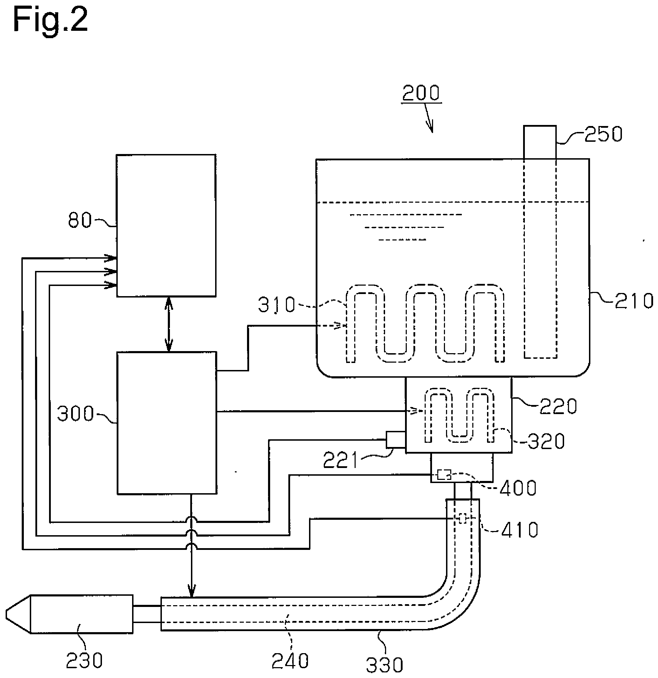

As shown in Fig. 2, in this embodiment, the pump 220 is provided on the bottom surface of the tank 210. Alternatively, the pump 220 may be provided on a side surface of the tank 210 near the bottom surface thereof. Still alternatively, the pump 220 may be located in the supply pipe 240. The pump 220 is provided with a rotational speed sensor 221 that detects a pump rotational speed NEP indicating the rotational speed of the pump 220.

A tank heater 310 that heats urea aqueous solution is provided in the tank 210. A pump heater 320 that heats urea aqueous solution is provided in the pump 220. A passage heater 330 that heats urea aqueous solution is further provided on the outer circumference of the supply pipe 240. These heaters 310, 320 and 330 are electric heaters. The pump heater 320 corresponds to the aforementioned pump heating section. The passage heater 330 corresponds to the aforementioned passage heating section. The tank heater 310 corresponds to the aforementioned tank heating section.

These heaters 310, 320 and 330 are connected to a heater control unit 300. The heater control unit 300 controls the amount of current supplied to each of the heaters 310, 320 and 330. The amount of current supplied to a heater can be controlled by any appropriate method. As an example, the amount can be controlled by duty control of adjusting the duty ratio of voltage to be supplied to a heater, voltage control of adjusting the magnitude of voltage to be supplied to a heater, or current control of adjusting the magnitude of a current to flow in a heater. The heater control unit 300 intercommunicates with a control unit 80 described later.

A temperature sensor 400 is provided near a discharge part of the pump 220. The temperature sensor 400 detects a urea aqueous solution temperature THN indicating the temperature of urea aqueous solution in the pump 220. A pressure sensor 410 is provided in the supply pipe 240 near the discharge part of the pump 220. The pressure sensor 410 detects a urea aqueous solution pressure NP indicating the pressure of urea aqueous solution in the supply pipe 240. The temperature sensor 400 and the pressure sensor 410 are connected to the control unit 80. The pressure sensor 410 corresponds to the aforementioned pressure detecting section. The urea aqueous solution temperature THN can be detected directly using the temperature sensor 400. Alternatively, the urea aqueous solution temperature THN can be detected indirectly by estimating the urea aqueous solution temperature THN using an outside air temperature, for example.

As shown in Fig. 1 referred to previously, a dispersion plate 60 is provided in the exhaust passage 26 between the urea injection valve 230 and the SCR catalyst 41. The dispersion plate 60 is for dispersing of urea aqueous solution injected through the urea injection valve 230 to encourage atomization of the urea aqueous solution.

Urea aqueous solution injected through the urea injection valve 230 reaches the SCR catalyst 41 and is then adsorbed onto the SCR catalyst 41 as ammonia. The ammonia adsorbed on the SCR catalyst 41 is used for reducing and purifying NOx.

The engine 1 is further provided with an exhaust recirculation device (hereinafter referred to as an EGR device). The EGR device is to reduce combustion temperatures in the cylinders by introducing some of exhaust into intake air, thereby reducing the emission of NOx. The exhaust recirculation device is formed of an EGR passage 13 for communication between the intake passage 3 and the exhaust manifold 8, an EGR valve 15 provided in the EGR passage 13, and an EGR cooler 14, for example. The opening degree of the EGR valve 15 is adjusted to control the amount of exhaust to flow back from the exhaust passage 26 to the intake passage 3, specifically the amount of external EGR. The EGR cooler 14 reduces the temperature of exhaust flowing in the EGR passage 13.

Various sensors and switches for detection of an engine operation state are attached to the engine 1. As an example, an air flow meter 19 detects an intake air amount GA in the intake passage 3. A throttle valve opening sensor 20 detects the opening degree of the intake throttle valve 16. An engine speed sensor 21 detects the rotational speed of the crankshaft, specifically an engine speed NE. An accelerator operation amount sensor 22 detects the depressing amount of the accelerator pedal (accelerator operating member), specifically an accelerator operation amount ACCP. An outside air temperature sensor 23 detects an outside air temperature THout. A vehicle speed sensor 24 detects a vehicle speed SPD of a vehicle on which the engine 1 is mounted. An ignition switch 25 detects operation by a driver of the vehicle to start and stop the engine 1.

A first exhaust temperature sensor 100 provided upstream of the oxidation catalyst 31 detects a first exhaust temperature TH1 indicating the temperature of exhaust before flowing into the oxidation catalyst 31. Adifferential pressure sensor 110 detects a pressure difference ΔP between the pressure of exhaust in a section upstream of the DPF catalyst 32 and that of the exhaust in a section downstream of the DPF catalyst 32.

A second exhaust temperature sensor 120 and a first NOx sensor 130 are provided in a section of the exhaust passage 26 that is between the first and second purifying members 30 and 40 and upstream of the urea injection valve 230. The second exhaust temperature sensor 120 detects a second exhaust temperature TH2 indicating the temperature of exhaust before flowing into the SCR catalyst 41. The first NOx sensor 130 detects a first NOx concentration N1 indicating the concentration of NOx in the exhaust before flowing into the SCR catalyst 41.

A second NOx sensor 140 is provided in a section of the exhaust passage 26 that is downstream of the third purifying member 50. The second NOx sensor 140 detects a second NOx concentration N2 indicating the concentration of NOx in exhaust after passing through the SCR catalyst 41.

Output from these various sensors is input to the control unit 80 as the aforementioned controller. The control unit 80 is mainly formed of a microcomputer including a central processing unit (CPU), a read-only memory (ROM) where various programs, maps or the like are stored in advance, a random access memory (RAM) that temporarily stores results of calculations by the CPU, for example, a timer counter, an input interface, and an output interface, for example.

The control unit 80 is responsible for various controls of the engine 1 including control of the amount of fuel to be injected through the fuel injection valves 4a to 4d and the fuel addition valve 5 and control of timing of the fuel injection, control of discharge pressure at the supply pump 10, control of the driving amount of the actuator 17 to open and close the intake throttle valve 16, and control of the opening degree of the EGR valve 15, for example.

The control unit 80 is further responsible for control of addition of urea aqueous solution through the urea injection valve 230 as one of controls for exhaust purification. For this addition control, the amount of urea aqueous solution to be supplied necessary for reducing NOx emitted from the engine 1 is calculated. The opening state of the urea injection valve 230 is controlled such that the amount of urea aqueous solution injected through the urea injection valve 230 becomes the same as the calculated amount. In this way, while the engine 1 is running, urea aqueous solution is supplied to the exhaust passage 26 to add the urea aqueous solution to exhaust to purify NOx.

The control unit 80 is further responsible for control of operation of the pump 220 by outputting a drive signal to the pump 220.

The control unit 80 is further responsible for heating control of each of the heaters 310, 320 and 330 to be exerted through the heater control unit 300. Specifically, the control unit 80 determines a frozen state of urea aqueous solution based on the urea aqueous solution temperature THN. If the urea aqueous solution is frozen and the urea aqueous solution cannot be supplied into the exhaust passage 26, the control unit 80 energizes each of the heaters 310, 320 and 330 to thaw the urea aqueous solution through the heater control unit 300. The heater control unit 300 and the control unit 80 responsible for the heating control correspond to the aforementioned heating controller.

This embodiment includes the tank heater 310, the pump heater 320, and the passage heater 330. When there is an abnormality in any of the heaters 310, 320 and 330, urea aqueous solution in the tank 210, the pump 220, or the supply pipe 240 cannot be heated even by executing the heating control. In this case, the urea aqueous solution cannot be thawed easily. In this embodiment, in response to the occurrence of an abnormality in a heater provided to any of the tank 210, the pump 220, and the supply pipe 240, the following abnormality diagnosing process is performed to allow identification of the heater where the abnormality has occurred.

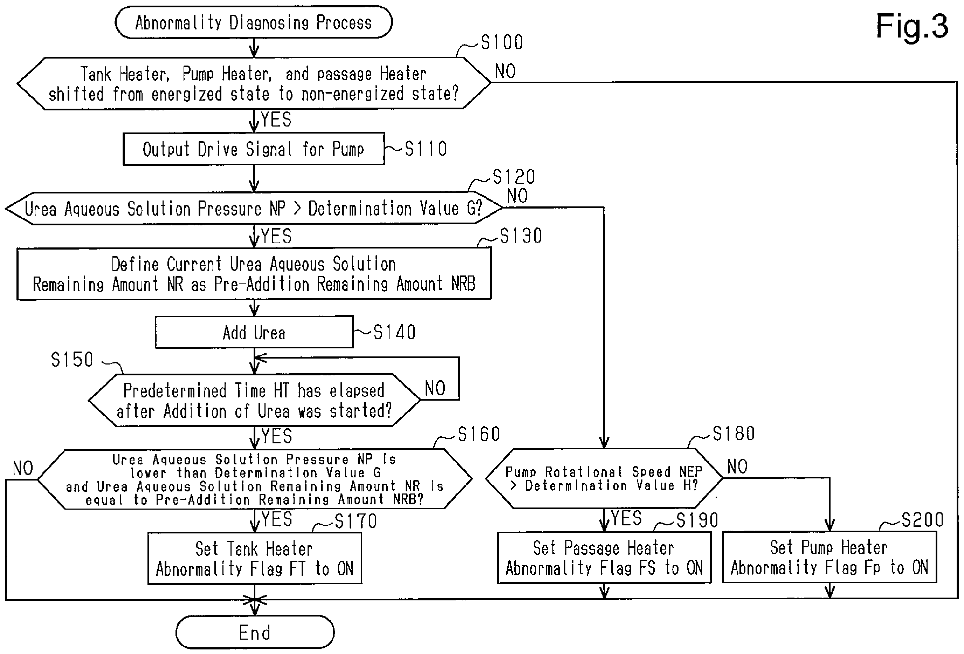

Fig. 3 shows a process for diagnosing an abnormality. The control unit 80 performs this process repeatedly. The control unit 80 to perform this abnormality diagnosing process corresponds to the aforementioned signal output section.

When starting this process, the control unit 80 first determines whether the tank heater 310, the pump heater 320, and the passage heater 330 are shifted from an energized state to a non-energized state (S100). If a negative determination is made in step S100, the control unit 80 temporarily suspends this process.

If a positive determination is made in step S100, the control unit 80 determines that the heating control of the pump heater 320, the passage heater 330, and the tank heater 310 was started. More strictly, the control unit 80 determines that the heating control was started and then finished. Next, the control unit 80 outputs a drive signal to the pump 220 (S110).

Next, the control unit 80 determines whether the urea aqueous solution pressure NP in the supply pipe 240 is higher than a determination value G (S120). The magnitude of the determination value G is set such that the urea aqueous solution pressure NP responsive to output of the drive signal to the pump 220 can be accurately determined to have increased from a pressure determined before the output of the drive signal based on the urea aqueous solution pressure NP higher than the determination value G.

If the urea aqueous solution pressure NP is less than the determination value G (S120: NO), the control unit 80 determines that operation of the pump 220 is not increasing the urea aqueous solution pressure NP. Next, the control unit 80 determines whether the pump rotational speed NEP is higher than a determination value H (S180). The magnitude of the determination value H is set such that the pump 220 can be accurately determined to be operating actually based on the pump rotational speed NEP higher than the determination value H.

If the pump rotational speed NEP is higher than the determination value H (S180: YES), the control unit 80 determines that the pump 220 is operating actually. Then, the control unit 80 changes a passage heater abnormality flag FS from OFF to ON (S190), which corresponds to a process of outputting a signal indicating the presence of an abnormality in the passage heater 330. The value of the passage heater abnormality flag FS (ON or OFF) is stored in a memory forming a storage of the control unit 80. Then, the control unit 80 temporarily suspends this process.

If the pump rotational speed NEP is lower than or equal to the determination value H (S180: NO), the control unit 80 determines that the pump 220 is not operating actually. Then, the control unit 80 changes a pump heater abnormality flag FP from OFF to ON (S200), which corresponds to a process of outputting a signal indicating the presence of an abnormality in the pump heater 320. The value of the pump heater abnormality flag FP (ON or OFF) is also stored in the memory forming the storage of the control unit 80. Then, the control unit 80 temporarily suspends this process.

If determining in step S120 that the urea aqueous solution pressure NP is higher than the determination value G (S120: YES), the control unit 80 stores a current urea aqueous solution remaining amount NR as a pre-addition remaining amount NRB (S130). Then, the control unit 80 exerts control of opening the urea injection valve 230 to add urea (S140).

Next, the control unit 80 determines whether a predetermined time HT has elapsed after addition of urea was started in step S140 (S150). The predetermined time HT is set such that change in the urea aqueous solution pressure NP resulting from addition of urea can be detected and change in the urea aqueous solution remaining amount NR resulting from addition of urea can be detected within the predetermined time HT.

If the predetermined time HT has not elapsed after addition of urea was started (S150: NO), the control unit 80 repeats the determination in step S150 until the predetermined time HT has elapsed.

If the predetermined time HT has elapsed after addition of urea was started (S150: YES), the control unit 80 determines whether the current urea aqueous solution pressure NP is lower than the determination value G and whether the current urea aqueous solution remaining amount NR has not changed from the pre-addition remaining amount NRB (S160). If the current urea aqueous solution pressure NP is higher than or equal to the determination value G or if the current urea aqueous solution remaining amount NR is different from the pre-addition remaining amount NRB (S160: NO), the control unit 80 temporarily suspends this process.

Determining the current urea aqueous solution pressure NP to be lower than the determination value G in step S160 means that the urea aqueous solution pressure NP having been determined to be higher than the determination value G in step S120 is then determined to be lower than the determination value G after addition of urea aqueous solution was started. Specifically, the urea aqueous solution pressure NP is determined to have been reduced during addition of urea aqueous solution. If determining in step S160 that the current urea aqueous solution pressure NP is lower than the determination value G and that the current urea aqueous solution remaining amount NR has not changed from the pre-addition remaining amount NRB (S160: YES), the control unit 80 proceeds to a process in step S170.

In step S170, the control unit 80 changes a tank heater abnormality flag FT from OFF to ON, which corresponds to a process of outputting a signal indicating the presence of an abnormality in the tank heater 310. The value of the tank heater abnormality flag FT (ON or OFF) is also stored in the memory forming the storage of the control unit 80. Then, the control unit 80 temporarily suspends this process.

Operation of the aforementioned abnormality diagnosing process will now be described.

When there is an abnormality in the tank heater 310, urea aqueous solution in the tank 210 is not thawed sufficiently. This reduces the amount of urea aqueous solution existing in the liquid form in the tank 210. Thus, as a result of addition of the urea aqueous solution, the urea aqueous solution in the liquid form will not be consumed completely in a short period. This reduces the urea aqueous solution pressure NP in the supply pipe 240. This reduction in the urea aqueous solution pressure NP in the supply pipe 240 means that the urea aqueous solution can be added even in the short period. Thus, urea aqueous solution in the pump 220 and the supply pipe 240 can be estimated to be thawed so that the pump heater 320 and the passage heater 330 can be estimated to be operating normally. Thus, if adding urea aqueous solution by operation of the pump 220 after starting the heating control of the tank heater 310, the pump heater 320, and the passage heater 330 reduces the urea aqueous solution pressure NP in the supply pipe 240, the occurrence of an abnormality in the tank heater 310 can be estimated while the pump heater 320 and the passage heater 330 can be estimated to be operating normally.

Adding urea aqueous solution in the absence of urea aqueous solution remaining in the tank 210 also reduces the urea aqueous solution pressure NP in the supply pipe 240. However, reduction in the urea aqueous solution pressure NP in the presence of urea aqueous solution remaining in the tank 210 is not caused by shortage of urea aqueous solution in the tank 210. In this case, it can be determined that the reduction in the urea aqueous solution pressure NP is caused by a thawing failure of urea aqueous solution in the tank 210.

If urea aqueous solution in the tank 210 remains in a frozen state, particularly if urea aqueous solution around the level sensor 250 is frozen, the urea aqueous solution remaining amount NR shows substantially no change between time before addition of urea aqueous solution is started and time after addition of the urea aqueous solution is started. Thus, if it is determined in step S160 that the current urea aqueous solution remaining amount NR has not changed from the pre-addition remaining amount NRB, the presence of urea aqueous solution remaining in the tank 210 can be estimated.

In the aforementioned abnormality diagnosing process, if it can be determined that the heating control of the tank heater 310, the pump heater 320, and the passage heater 330 was started (S100: YES), a drive signal is output to the pump 220 to drive the pump 220 (S110) and urea aqueous solution is added (S140). If the urea aqueous solution pressure NP is reduced during addition of the urea aqueous solution while the presence of urea aqueous solution remaining in the tank 210 can be estimated (S160: YES), the tank heater abnormality flag FT is set to ON (S170). Thus, if there is an abnormality in the tank heater 310 provided to the tank 210 out of multiple heaters, this abnormality in the tank heater 310 can be identified.

When there is an abnormality in the pump heater 320, urea aqueous solution in the pump 220 is not thawed sufficiently by executing the heating control of the pump heater 320. In this case, delivery of the urea aqueous solution from the pump 220 to the supply pipe 240 is disrupted. Thus, when there is the abnormality in the pump heater 320, the urea aqueous solution pressure NP in the supply pipe 240 responsive to output of a drive signal to the pump 220 is hard to increase from a pressure determined before the output of the drive signal.

When there is an abnormality in the passage heater 330, urea aqueous solution in the supply pipe 240 is not thawed sufficiently by executing the heating control of the passage heater 330. If the urea aqueous solution in the supply pipe 240 is frozen, the urea aqueous solution pressure NP in the supply pipe 240 does not change. Thus, when there is the abnormality in the passage heater 330, the urea aqueous solution pressure NP responsive to output of a drive signal to the pump 220 is also hard to increase from a pressure determined before the output of the drive signal.

If the pump 220 is not operating actually while the urea aqueous solution pressure NP in the supply pipe 240 does not increase even though a drive signal is output to the pump 220, urea aqueous solution in the pump 220 can be estimated to be frozen. In this case, in the aforementioned abnormality diagnosing process, if it can be determined that the heating control of the pump heater 320 and the passage heater 330 was started (S100: YES), a drive signal is output to the pump 220 (S110). If it is determined that the urea aqueous solution pressure NP in the supply pipe 240 does not increase even though the drive signal is output to the pump 220 (S120: NO), it is determined based on the pump rotational speed NEP whether the pump 220 is operating actually (S180). If the pump 220 is determined not to be operating actually (S180: NO), urea aqueous solution in the pump 220 can be estimated to be frozen. Then, the pump heater abnormality flag FP is set to ON (S200).

If the pump 220 is operating actually while the urea aqueous solution pressure NP in the supply pipe 240 does not increase even though a drive signal is output to the pump 220, urea aqueous solution in the pump 220 can be estimated to be thawed whereas urea aqueous solution in the supply pipe 240 can be estimated to be frozen. In this case, in the aforementioned abnormality diagnosing process, if it can be determined that the heating control of the pump heater 320 and the passage heater 330 was started (S100: YES), a drive signal is output to the pump 220 (S110). If it is determined that the urea aqueous solution pressure NP in the supply pipe 240 is not increasing even though the drive signal is output to the pump 220 (S120: NO), it is determined based on the pump rotational speed NEP whether the pump 220 is operating actually (S180). If the pump 220 is determined to be operating actually (S180: YES), urea aqueous solution in the supply pipe 240 can be estimated to be frozen. Then, the passage heater abnormality flag FT is set to ON (S190).

As described above, it is determined whether the pump 220 is operating actually. Then, the pump heater abnormality flag FP indicating an abnormality in the pump heater 320 and the passage heater abnormality flag FS indicating an abnormality in the passage heater 330 are output independently. Thus, a heater having an abnormality can be identified out of the heaters provided to the pump 220 and the supply pipe 240.

As described above, this embodiment achieves the following advantages.
(1) The control unit 80 adds urea aqueous solution by activating the pump 220 after starting the heating control of the tank heater 310, the pump heater 320, and the passage heater 330. If the urea aqueous solution pressure NP is reduced during addition of urea aqueous solution and the current urea aqueous solution remaining amount NR determined after start of addition of urea aqueous solution does not change from the pre-addition remaining amount NRB so that there is urea aqueous solution remaining in the tank 210, the control unit 80 determines that there is an abnormality in the tank heater 310. Then, the control unit 80 sets the tank heater abnormality flag FT to ON. Thus, an abnormality in the tank heater 310 can be identified out of abnormalities that can occur in the tank heater 310, the pump heater 320, and the passage heater 330.
(2) If the pump 220 is not operating in a state after the heating control of the pump heater 320 and the passage heater 330 is started and the urea aqueous solution pressure NP responsive to output of a drive signal to the pump 220 is not increasing from a pressure determined before the output of the drive signal, the control unit 80 sets the pump heater abnormality flag FP to ON indicating an abnormality in the pump heater 320. Meanwhile, if the pump 220 is operating in the same state, the control unit 80 sets the passage heater abnormality flag FT to ON indicating an abnormality in the passage heater 330. Thus, a heater having an abnormality can also be identified out of the heaters provided to the pump 220 and the supply pipe 240.

The aforementioned embodiment may be modified as follows.

In step S160 shown in Fig. 3 referred to previously, the presence or absence of urea aqueous solution remaining in the tank 210 is determined by determining whether the urea aqueous solution remaining amount NR has changed from the pre-addition remaining amount NRB. The presence or absence of urea aqueous solution remaining in the tank 210 may also be determined by a different way.

As an example, the urea aqueous solution remaining amount NR larger than a predetermined reference value also shows the presence of urea aqueous solution remaining in the tank 210. In step S160 shown in Fig. 3, if determining that the urea aqueous solution pressure NP is reduced during addition of urea aqueous solution and that the urea aqueous solution remaining amount NR is larger than the predetermined reference value, the control unit 80 may set the tank heater abnormality flag FT to ON in step S170. An abnormality diagnosing process according to this modification can be performed by changing part of the aforementioned abnormality diagnosing process shown in Fig. 3.

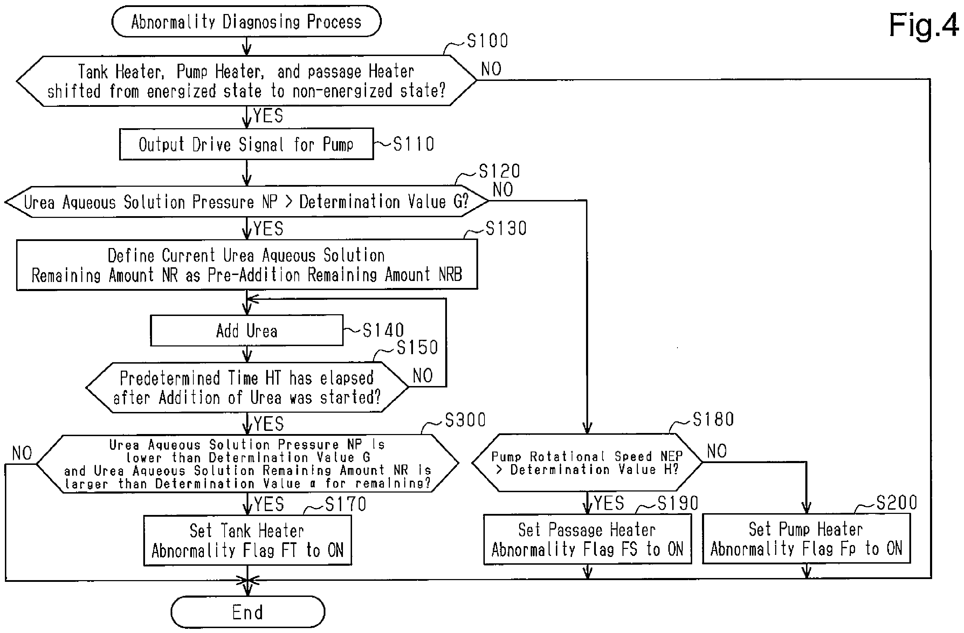

As shown in Fig. 4, in the abnormality diagnosing process of this modification, the aforementioned process in step S130 shown in Fig. 3 is omitted. If a positive determination is made in step S120, a process in step S140 and its following process are performed. The process in step S160 is replaced by a process in step S300. In step S300, the control unit 80 determines whether the current urea aqueous solution pressure NP is lower than the determination value G and whether the current urea aqueous solution remaining amount NR is larger than a predetermined residual determination value α. The residual determination value α corresponds to the aforementioned reference value. The magnitude of the residual determination value α is set such that the presence of urea aqueous solution remaining in the tank 210 can be determined accurately based on the urea aqueous solution remaining amount NR larger than the residual determination value α.

If a negative determination is made in step S300 (S300: NO), the control unit 80 temporarily suspends the abnormality diagnosing process of this modification. Meanwhile, if a positive determination is made in step S300 (S300: YES), the control unit 80 changes the tank heater abnormality flag FT from OFF to ON (S170). Then, the control unit 80 temporarily suspends this process. This modification achieves advantages comparable to those of the aforementioned embodiment.

In the abnormality diagnosing process shown in Figs. 3 and 4, if the urea aqueous solution pressure NP having been determined to be higher than the determination value G in step S120 is then determined to be lower than the determination value G after addition of urea aqueous solution was started, the urea aqueous solution pressure NP is determined to be reduced during addition of urea aqueous solution. Reduction in the urea aqueous solution pressure NP during addition of urea aqueous solution may be determined by a different way. As an example, reduction in the urea aqueous solution pressure NP may be determined based on the amount of change in the urea aqueous solution pressure NP occurring during addition of urea aqueous solution.

The pump rotational speed NEP is detected to determine whether the pump 220 is operating actually. Operation of the pump 220 may be determined by a different method. This determination may be made for example by providing a sensor that can only determine whether or not the pump 220 is rotating.

The temperature of urea aqueous solution in the pump 220 is detected as the urea aqueous solution temperature THN. Alternatively, the temperature of urea aqueous solution in the tank 210 or the temperature of urea aqueous solution in the supply pipe 240 may be detected.

A signal indicating an abnormality in the tank heater 310, a signal indicating an abnormality in the pump heater 320, or a signal indicating an abnormality in the passage heater 330 is output in the way of setting the value of a flag such as the tank heater abnormality flag FT, the pump heater abnormality flag FP, or the passage heater abnormality flag FT. A signal indicating an abnormality may be output in a different way. As an example, a warning light may be lit individually in response to an abnormality occurring in each heater, or an alarm may be issued individually by sound.

An electric heater is used as a heating section to heat urea aqueous solution. Alternatively, the heating section may be a coolant passage that allows heating of the tank 210, the pump 220, or the supply pipe 240 with coolant for the engine, for example. In this modification, if the tank 210, the pump 220, or the supply pipe 240 is not heated normally with coolant, a heating section suffering from an abnormality can also be identified. Not all the heating sections provided to the tank 210, the pump 220, and the supply pipe 240 need to be formed of electric heaters. Some of these heating sections may be formed of a coolant passage that allows heating with coolant for the engine, for example.

The position of the pressure sensor 410 may be changed arbitrarily within the supply pipe 240.

In step S100 shown in Figs. 3 and 4 referred to previously, it is determined whether the heating control of the pump heater 320, the passage heater 330, and the tank heater 310 was started by determining whether the pump heater 320, the passage heater 330, and the tank heater 310 are shifted from an energized state to a non-energized state. More strictly, it is determined whether the heating control was started and then finished.

Alternatively, in the aforementioned abnormality diagnosing process, the process in step S110 and its following process can still be performed even if the heating control is not finished but it still continues. Specifically, if there is a history of having executed the heating control, the process in step S110 and its following process can be performed. This achieves advantages comparable to those of the aforementioned embodiment.

More strictly, regarding making a determination whether the heating control of the pump heater 320, the passage heater 330, and the tank heater 310 was started, it may be determined whether the heating control was started and this heating control still continues, for example.

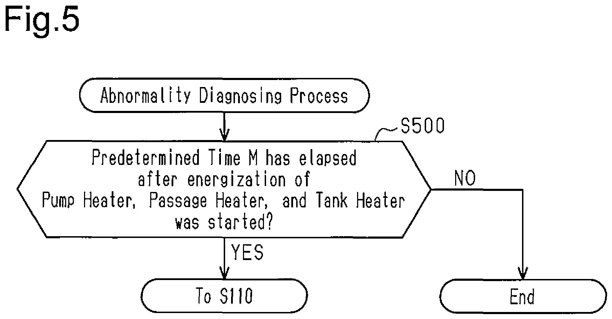

This modification can be implemented for example by performing the process in step S500 of Fig. 5 instead of the process in step S100 of Figs. 3 and 4 referred to previously.

As shown in Fig. 5, in step S500, it is determined whether a predetermined time M has elapsed after energization of the pump heater 320, the passage heater 330, and the tank heater 310 was started. The predetermined time M is set to the value described below.

If all the pump heater 320, the passage heater 330, and the tank heater 310 operate normally, the longer the time elapsed after start of energization of the pump heater 320, the passage heater 330, and the tank heater 310, the more thawed becomes the urea aqueous solution in the pump 220, the supply pipe 240, and the tank 210. Thus, it can be determined whether urea aqueous solution is in a state that allows addition of the urea aqueous solution based on the time elapsed after start of energization of each heater. The length of the predetermined time M is set such that urea aqueous solution can be accurately determined to be in a state that allows addition of the urea aqueous solution based on time elapsed after start of energization of the pump heater 320, the passage heater 330, and the tank heater 310 having reached the predetermined time M. The predetermined time M may be time required for thawing urea aqueous solution entirely in the pump 220, the supply pipe 240, and the tank 210. The predetermined time M may also be time required for partially thawing urea aqueous solution in each of the pump 220, the supply pipe 240, and the tank 210 by an amount that allows addition of this urea aqueous solution. If time for current supplied to the pump heater 320, the passage heater 330, and the tank heater 310 is set in advance, setting the predetermined time M to be shorter than this time of energization makes it possible to determine accurately that the heating control was started and this heating control still continues.

If a negative determination is made in step S500, urea aqueous solution is determined not to be thawed to an extent that allows addition of the urea aqueous solution. Then, the abnormality diagnosing process is temporarily suspended.

If a positive determination is made in step S500, it is determined that the heating control of the tank heater 310, the pump heater 320, and the passage heater 330 was started. More strictly, it is determined that the heating control was started and this heating control still continues, and that urea aqueous solution is thawed to an extent that allows addition of this urea aqueous solution in the absence of abnormality in each heater. If this positive determination is made, the process in step S110 and its following process shown in Figs. 3 and 4 referred to previously are performed.

This modification achieves advantages comparable to those of the aforementioned embodiment or those of the modification shown in Fig. 4.

The process of identifying an abnormality in the pump heater 320 or the passage heater 330 may be omitted from the abnormality diagnosing process shown in Figs. 3 and 4. As an example, the respective processes in steps S120, S180, S190, and S200 are omitted from the abnormality diagnosing process shown in Figs. 3 and 4. In the abnormality diagnosing process shown in Fig. 3, the process in step S130 and its following process are performed after the process in step S110. In the abnormality diagnosing process shown in Fig. 4, the process in step S140 and its following process are performed after the process in step S110. In step S160 of the abnormality diagnosing process shown in Fig. 3 or in step S300 of the abnormality diagnosing process shown in Fig. 4, instead of comparing the urea aqueous solution pressure NP and the determination value G, reduction in the urea aqueous solution pressure NP is determined based on the amount of change in the urea aqueous solution pressure NP occurring during addition of urea aqueous solution, for example. This modification also achieves the aforementioned advantage (1).

In each of the aforementioned embodiment, this invention is applied to the additive supply device that uses urea aqueous solution as a reducing agent. This invention is also applicable to an additive supply device that uses a different additive.

### DESCRIPTION OF THE REFERENCE NUMERALS

1 ... Engine, 2 ... Cylinder head, 3 ... Intake passage, 4a to 4d ... Fuel injection valve, 5 ... Fuel addition valve, 6a to 6d ... Exhaust port, 7 ... Intake manifold, 8 ... Exhaust manifold, 9 ... Common rail, 10 ... Supply pump, 11 ... Turbocharger, 13 ... EGR passage, 14 ... EGR cooler, 15 ... EGR valve, 16 ... Intake throttle valve, 17 ... Actuator, 18 ... Intercooler, 19 ... Air flow meter, 20 ... Throttle valve opening sensor, 21 ... Engine speed sensor, 22 ... Accelerator operation amount sensor, 23 ... Outside air temperature sensor, 24 ... Vehicle speed sensor, 25 ... Ignition switch, 26 ... Exhaust passage, 27 ... Fuel supply pipe, 30 ... First purifying member, 31 ... Oxidation catalyst, 32 ... Filter, 40 ... Second purifying member, 41 ... NOx purifying catalyst (selective reduction NOx catalyst: SCR catalyst), 50 ... Third purifying member, 51 ... Ammonia oxidation catalyst, 60 ... Dispersion plate, 80 ... Controller, 100 ... First exhaust temperature sensor, 110 ... Differential pressure sensor, 120 ... Second exhaust temperature sensor, 130 ... First NOx sensor, 140 ... Second NOx sensor, 200 ... Urea aqueous solution supply mechanism, 210 ... Tank, 220 ... Pump, 221 ... Rotational speed sensor, 230 ... Urea injection valve, 240 ... Supply pipe, 250 ... Level sensor, 300 ... Heater controller, 310 ... Tank heater, 320 ... Pump heater, 330 ... Passage heater, 400 ... Temperature sensor, 410 ... Pressure sensor

## Claims

1. An additive supply device for an internal combustion engine (1), comprising:
a tank (210) that stores additive;
a pump (220) that delivers the additive in the tank (210);
a supply passage (240) through which the additive delivered from the pump (220) is supplied to an exhaust passage (26) of the internal combustion engine (1);
a tank heating section (310) that heats the additive in the tank (210);
a pump heating section (320) that heats the additive in the pump (220);
a passage heating section (330) that heats the additive in the supply passage (240);
a pressure detecting section (410) that detects the pressure of the additive in the supply passage (240);
a remaining amount detecting section (250) that detects a remaining amount of the additive in the tank (210);
a heating controller (80, 300) that is configured to exert heating control of the tank heating section (310), the pump heating section (320), and the passage heating section (330); and
a signal output section (80), wherein, in a case in which the pump (220) is configured to be operated to supply the additive to the exhaust passage (26) after the heating control of the tank heating section (310), the pump heating section (320), and the passage heating section (330) is started, **characterized in that** the signal output section (80) is configured to output a signal indicating an abnormality in the tank heating section (310) if the additive pressure detected by the pressure detecting section (410) is reduced during supply of the additive and the additive remaining amount detected by the remaining amount detecting section (250) indicates the presence of the additive remaining in the tank (210).

2. The additive supply device for an internal combustion engine (1) according to claim 1, wherein the signal output section (80) is configured to output a signal indicating an abnormality in the tank heating section (310) if the additive pressure detected by the pressure detecting section (410) is reduced during supply of additive and the additive remaining amount shows no change between time before the supply of the additive is started and time after the supply of the additive is started.

3. The additive supply device for an internal combustion engine (1) according to claim 1, wherein the signal output section (80) is configured to output a signal indicating an abnormality in the tank heating section (310) if the additive pressure detected by the pressure detecting section (410) is reduced during the supply of additive and the additive remaining amount detected by the remaining amount detecting section (250) is larger than a predetermined reference value.

4. The additive supply device for an internal combustion engine (1) according to any one of claims 1 to 3, wherein at least one of the tank heating section (310), the pump heating section (320), and the passage heating section (330) is an electric heater.

## Patentansprüche

1. Additivzuführvorrichtung für eine Verbrennungskraftmaschine (1), aufweisend:
einen Tank (210), der ein Additiv speichert;
eine Pumpe (220), die das Additiv in den Tank (210) befördert;
eine Zuführleitung (240), durch die das von der Pumpe (220) beförderte Additiv einer Abgasleitung (26) der Verbrennungskraftmaschine (1) zugeführt wird;
einen Tankheizabschnitt (310), der das Additiv in dem Tank (210) aufheizt;
einen Pumpenheizabschnitt (320), der das Additiv in der Pumpe (220) aufheizt;
einen Leitungsheizabschnitt (330), der das Additiv in der Zuführleitung (240) aufheizt;
einen Druckerfassungsabschnitt (410), der den Druck des Additivs in der Zuführleitung (240) erfasst;
einen Restmengenerfassungsabschnitt (250), der eine Restmenge des Additivs in dem Tank (210) erfasst;
eine Heizsteuerung (80, 300), die so konfiguriert ist, dass sie eine Heizsteuerung des Tankheizabschnitts (310), des Pumpenheizabschnitts (320) und des Leitungsheizabschnitts (330) ausführt; und
einen Signalausgabeabschnitt (80), wobei, in einem Fall, bei dem die Pumpe (220) so konfiguriert ist, dass sie betrieben wird, um, nachdem die Heizsteuerung des Tankheizabschnitts (310), des Pumpenheizabschnitts (320) und des Leitungsheizabschnitts (330) gestartet wurde, das Additiv der Abgasleitung (26) zuzuführen, **dadurch gekennzeichnet, dass** der Signalausgabeabschnitt (80) so konfiguriert ist, ein Signal auszugeben, das eine Störung in dem Tankheizabschnitt (310) anzeigt, falls der Additivdruck, der durch den Druckerfassungsabschnitt (410) erfasst wurde, während der Zufuhr des Additivs reduziert wird, und die Additivrestmenge, die durch den Restmengenerfassungsabschnitt (250) erfasst wurde, die Präsenz des Additivs, das in dem Tank (210) verbleibt, anzeigt.

2. Additivzuführvorrichtung für eine Verbrennungskraftmaschine (1) nach Anspruch 1, wobei der Signalausgabeabschnitt (80) so konfiguriert ist, dass er ein Signal ausgibt, das eine Störung in dem Tankheizabschnitt (310) anzeigt, falls der Additivdruck, der durch den Druckerfassungsabschnitt (410) während der Zufuhr des Additivs reduziert wird und die Additivrestmenge keine Änderung zwischen der Zeit, bevor die Zufuhr des Additivs gestartet wird und der Zeit, nachdem die Zufuhr des Additivs gestartet wurde, zeigt.

3. Additivzuführvorrichtung für eine Verbrennungskraftmaschine (1) nach Anspruch 1, wobei der Signalausgabeabschnitt (80) so konfiguriert ist, dass er ein Signal ausgibt, das eine Störung in dem Tankheizabschnitt (310) anzeigt, falls der Additivdruck, der durch den Druckerfassungsabschnitt (410) während der Zufuhr des Additivs reduziert wird und die Additivrestmenge, die durch den Restmengenerfassungsabschnitt (250) erfasst wird, größer ist als ein vorgegebener Referenzwert.

4. Additivzuführvorrichtung für eine Verbrennungskraftmaschine (1) nach einem der Ansprüche 1 bis 3, wobei zumindest eines von dem Tankheizabschnitt (310), dem Pumpenheizabschnitt (320) und dem Leitungsheizabschnitt (330) eine elektrische Heizung ist.

## Revendications

1. Dispositif d'alimentation en additif pour un moteur à combustion interne (1) comprenant :
un réservoir (210) qui stocke l'additif ;
une pompe (220) qui délivre l'additif dans le réservoir (210) ;
un passage d'alimentation (240) à travers lequel l'additif délivré à partir de la pompe (220) est amené à un passage d'échappement (26) du moteur à combustion interne (1) ;
une section de chauffage de réservoir (310) qui chauffe l'additif dans le réservoir (210) ;
une section de chauffage de pompe (320) qui chauffe l'additif dans la pompe (220) ;
une section de chauffage de passage (330) qui chauffe l'additif dans le passage d'alimentation (240) ;
une section de détection de pression (410) qui détecte la pression de l'additif dans le passage d'alimentation (240) ;
une section de détection de quantité résiduelle (250) qui détecte une quantité résiduelle de l'additif dans le réservoir (210) ;
un organe de commande de chauffage (80, 300) qui est configuré pour exercer la commande de chauffage de la section de chauffage de réservoir (310), de la section de chauffage de pompe (320), et de la section de chauffage de passage (330) ; et
une section de sortie de signal (80), dans lequel, dans un cas dans lequel la pompe (220) est configurée pour être actionnée afin d'amener l'additif au passage d'échappement (26) après que la commande de chauffage de la section de chauffage de réservoir (310), de la section de chauffage de pompe (320) et de la section de chauffage de passage (330) a été déclenchée, **caractérisé en ce que** la section de sortie de signal (80) est configurée pour produire un signal indiquant une anomalie dans la section de chauffage de réservoir (310) si la pression d'additif détectée par la section de détection de pression (410) est réduite pendant l'alimentation de l'additif et que la quantité résiduelle d'additif détectée par la section de détection de quantité résiduelle (250) indique la présence de l'additif restant dans le réservoir (210).

2. Dispositif d'alimentation en additif pour un moteur à combustion interne (1) selon la revendication 1, dans lequel la section de sortie de signal (80) est configurée pour produire un signal indiquant une anomalie dans la section de chauffage de réservoir (310) si la pression d'additif détectée par la section de détection de pression (410) est réduite pendant l'alimentation d'additif et que la quantité résiduelle d'additif ne représente aucun changement entre le moment avant que l'alimentation du dispositif ne soit déclenchée et le moment après que l'alimentation d'additif a été déclenchée.

3. Dispositif d'alimentation en additif pour un moteur à combustion interne (1) selon la revendication 1, dans lequel la section de sortie de signal (80) est configurée pour produire un signal indiquant une anomalie dans la section de chauffage de réservoir (310) si la pression d'additif détectée par la section de détection de pression (410) est réduite pendant l'alimentation d'additif et que la quantité résiduelle d'additif détectée par la section de détection de quantité résiduelle (250) est supérieure à une valeur de référence prédéterminée.

4. Dispositif d'alimentation en additif pour un moteur à combustion interne (1) selon l'une quelconque des revendications 1 à 3, dans lequel au moins l'une parmi la section de chauffage de réservoir (310), la section de chauffage de pompe (320), et la section de chauffage de passage (330) est un dispositif de chauffage électrique.
